Europäisches Patentamt

**European Patent Office**

Office européen des brevets

(11) Numéro de publication: **0 258 162**
**A2**

## (12) DEMANDE DE BREVET EUROPEEN

(21) Numéro de dépôt: **87420223.7**

(51) Int. Cl.⁴: **B 60 N 3/04**

(22) Date de dépôt: **20.08.87**

(30) Priorité: **20.08.86 CA 516442**

(43) Date de publication de la demande:
**02.03.88 Bulletin 88/09**

(84) Etats contractants désignés: **DE ES FR GB IT**

(71) Demandeur: **SOCIETE DE GESTION PAMAFRET LTEE**
**625, rue Balboa**
**Boucherville Québec J4B 6W6 (CA)**

**Dupont, André**
**960, Marie-Victorin**
**Boucherville Québec J4B 1Y8 (CA)**

(72) Inventeur: **Dupont, André**
**960, Marie-Victorin**
**Boucherville Québec J4B 1Y8 (CA)**

**Laurent, Paul**
**625, rue Balboa**
**Boucherville Québec J4B 6W6 (CA)**

(74) Mandataire: **Laurent, Michel et al**
**Cabinet LAURENT et GUERRE B.P. 32**
**F-69131 Ecully Cedex (FR)**

(54) **Tapis pour automobile.**

(57) Un tapis d'automobile amovible (10) consistant en une base de matière plastique (30 comprenant une cuve (32) munie d'un système d'arêtes verticales (36) caractérisé en ce que ladite base (3) est recouverte d'une moquette (20) dont l'espacement et la hauteur des brins (22) sont tels que les particules de contaminants pouvant être déposées sur la moquette (20) puissent tomber entre les brins (22).

FIG.1

EP 0 258 162 A2

**Description**

## DOMAINE DE L'INVENTION

L'invention a trait à un tapis amovible d'automobile recouvert de moquette, laquelle moquette est choisie pour ses caractéristiques permettant au sable déposé dessus par les souliers de l'utilisateur, de pénétrer rapidement vers l'intérieur de la moquette et qu'ainsi soit conservée l'esthétique que procure la moquette.

## DESCRIPTION DE L'ART ANTERIEUR

L'emploi d'une moquette pur couvrir le plancher d'automobile est depuis longtemps répandu et apprécié pour les qualités esthétiques qu'en retire l'intérieur de la voiture. Cependant cette moquette, dû principalement à la géométrie de l'habitacle d'une automobile, est difficile à nettoyer. Pour détourner cet inconvénient on a recours à un deuxième tapis recouvrant uniquement les parties les plus susceptibles de se salir. Ces tapis sont faits de façon à ce que l'eau, le sable et d'autre contaminants ne puissent venir en contact, d'une façon quelconque, avec la moquette permanente.

On trouve sur le marché, grand nombre de tapis différents dans lesquels on voit certaines améliorations technologiques qui présentent comme avantages, soit d'éviter le déplacement du tapis, soit d'éviter que les vêtements de l'usager entrent en contact avec les contaminants, ou, finalement, dans sa plus simple expression d'éviter que l'eau, la boue et les autres contaminants ne salissent la moquette permanente.

Ainsi, on trouve sur le marché des tapis avec différents motifs sculptés, faits entièrement de matière plastique. D'autres, aussi faits en matières plastiques, présentent des cuves comportant un système pour éloigner les vêtements des contaminants. De plus, parmi ces tapis on en retrouve quelquesuns recouverts de moquette.

Parmi les tapis recouverts de moquette, on peut citer celui décrit dans le document US - A 4,382,986 (Reuben). Le brevet décrit un tapis constitué d'une moquette et d'un recouvrement arrière fait de matière plastique. On insiste surtout sur l'épaisseur et les propriétés particulières que doit présenter la matière plastique pour assurer un maintien amélioré de la moquette lors de son utilisation dans l'automobile. On propose aussi que la moquette soit fabriquée indifféremment par laminage ou par moulage sous pression grâce à la technique des moules apareillés.

Un autre brevet peut aussi être considéré, il s'agit du document US - A 4,199,634 (Pole et al). Ce brevet s'intéresse surtout à fournir une moquette recouvrant toute la superficie du plancher de l'habitacle d'un véhicule et présentant des propriétés d'isolation sonore améliorées. On propose que par un procédé de laminage, l'endos d'une moquette soit enduit d'un premier composé venant former une couche de fond permettant qu'une deuxième couche constituée d'une matière plastique vienne former la paroi isolante.

La première couche de base peut être constituée d'un latex, tandis qu'il est suggéré, pour la deuxième couche, d'utiliser surtout un caoutchouc vulcanisé. De plus, pour pouvoir permettre l'installation sur le plancher du véhicule, il est proposé que le tapis soit moulé selon le procédé du moulage par moules appareillés.

## OBJECTIF DE L'INVENTION

Le premier objectif à cette invention est de simplifier le travail de nettoyage de l'automobile en évitant que le sable accumulé sous les chaussures de l'utilisateur ne se dépose sur la moquette installée en permanence dans le véhicule.

Le deuxième objectif à cette invention est que le tapis conserve une apparence esthétique acceptable entre chaque période d'entretien.

Les présents objectifs seront pleinement réalisés par l'utilisation d'une moquette dont les brins mesurés centre à centre sont espacés de trois (3) à cinq (5) millimètres et d'une hauteur d'environ dix (10) millimètres. Ces caractéristiques permettent de conserver l'esthétique du tapis au cours de l'utilisation en retenant et dissimulant le sable collé aux chaussures de l'utilisateur. De plus, un bac central, tel que décrit dans le document CA - A 1,198,466 (Dupont et al), est installé dans la section centrale de la portion destinée à être déposée dans la partie la plus profonde du plancher de l'automobile.

## BREVE DESCRIPTION DES DESSINS

La figure 1 présente une vue isométrique d'une réalisation de l'invention;

la figure 2 présente une vue en plan d'une réalisation de l'invention;

la figure 3 présente une coupe selon la ligne A présentée à la figure 2 de l'invention;

la figure 4 preésente la disposition des brins constituant la moquette du tapis;

## DESCRIPTION D'UNE REALISATION PREFEREE DE L'INVENTION

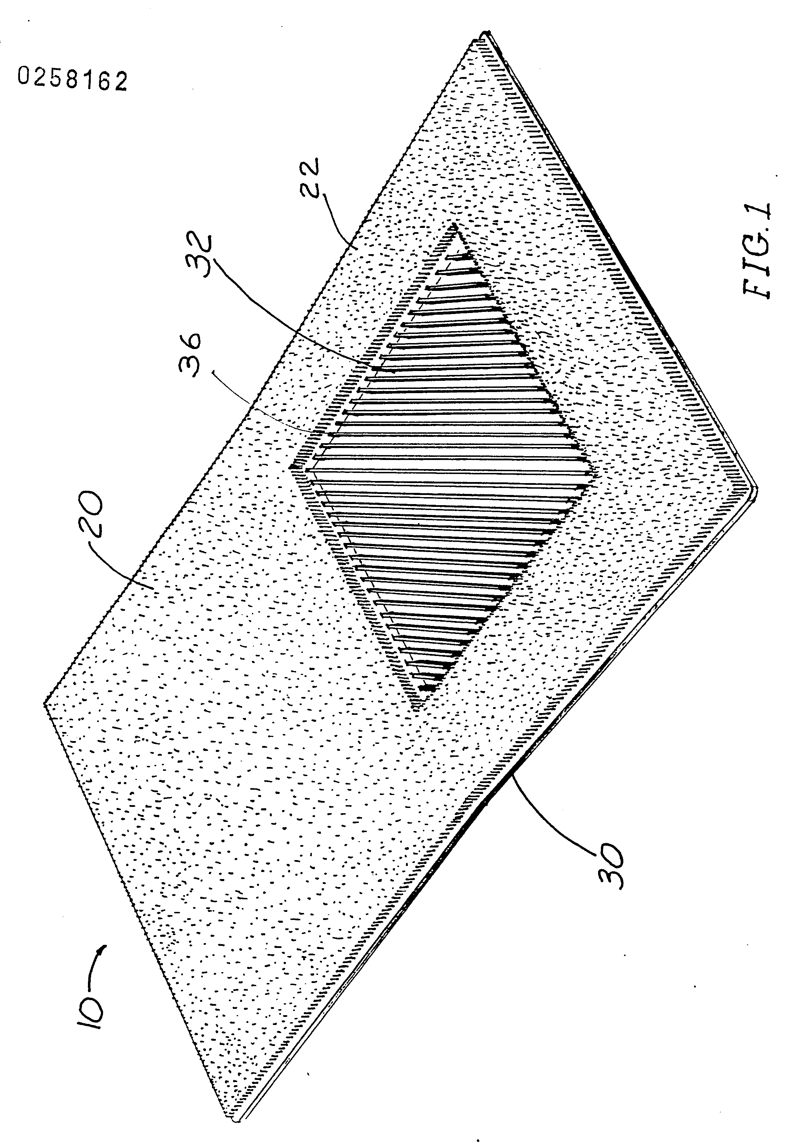

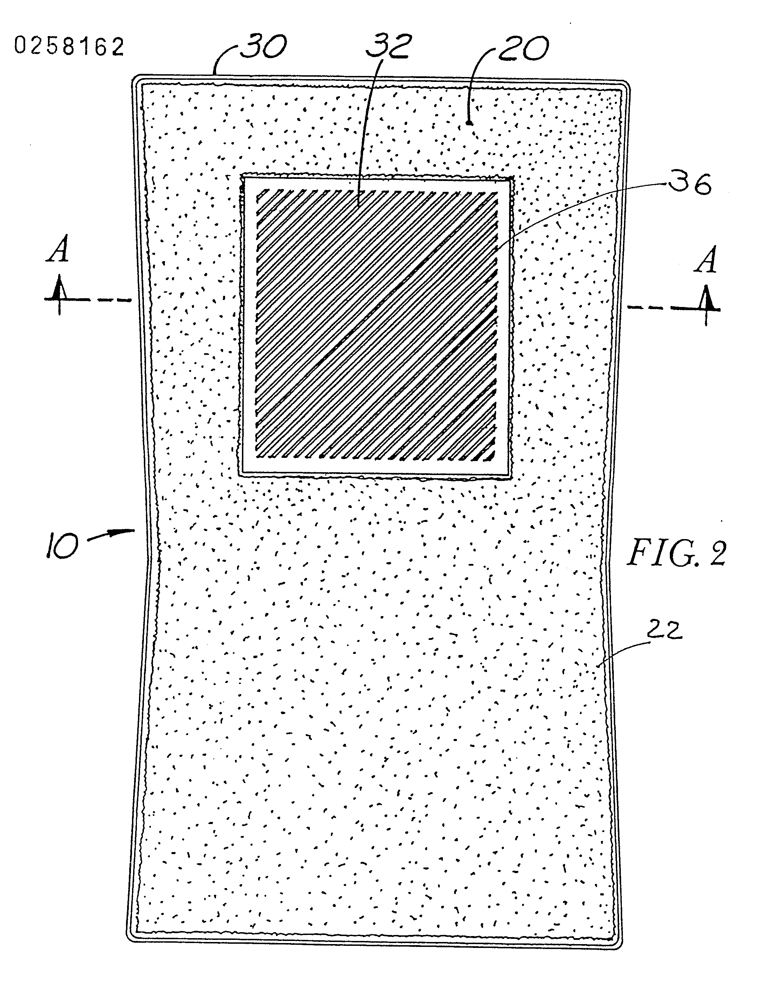

Le tapis numéroté 10 réalisé selon l'invention et tel que présenté aux figures 1 à 4, consiste en une base de matière plastique 30, comprenant un bac ou cuve 32 et un rebord 34 installé en périphérie du tapis, ainsi qu'un recouvrement de moquette 20 couvrant complètement la surface du tapis, à l'exception de la portion occupée par le bac 32.

Ladite moquette 20 est caractérisée par l'espacement centre à centre des brins 22 et leur hauteur. Ces dimensions sont choisies pour permettre au sable de se déposer rapidement dans le fond de la moquette 20 et éventuellement du bac 32, conservant ainsi l'esthétique recherchée par l'utilisation de ce tapis 10.

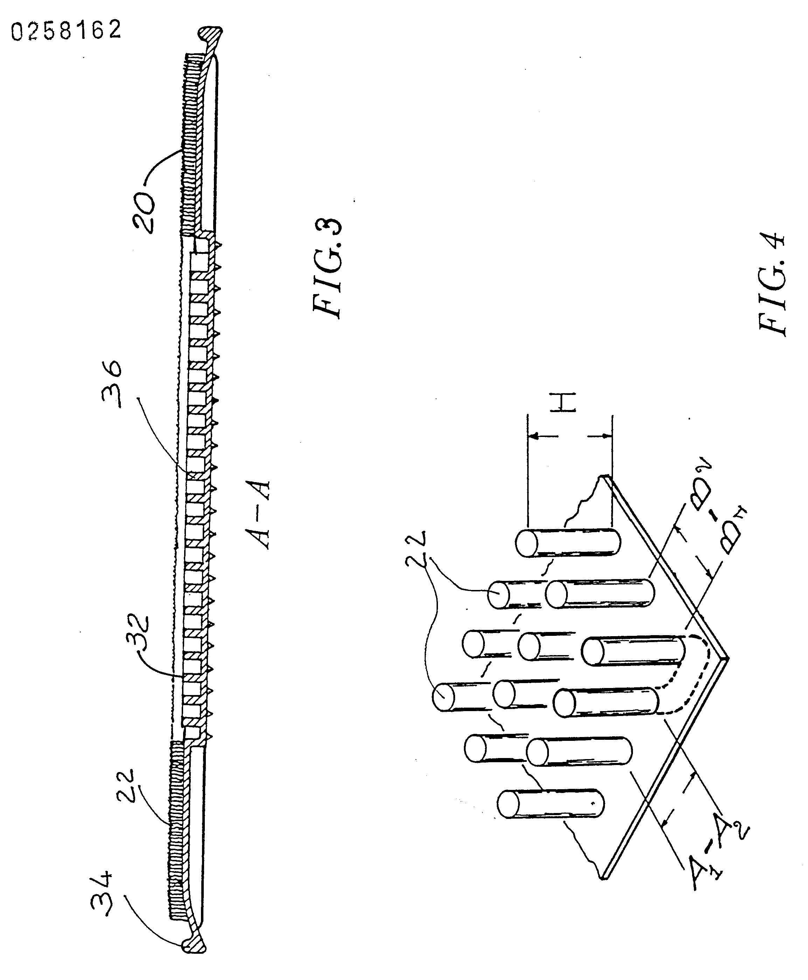

Les dimensions ayant été jugées comme étant celles qui permettent d'obtenir le résultat désiré sont, telles que présentées à la figure 4, de 3 à 5 mm pour les espacements $A_1$-$A_2$ et $B_1$-$B_2$ et d'environ 10 mm pour la hauteur H.(voir figure 4).

Le bac 32 est d'un type connu de l'homme versé dans l'art. Dans sa présente réalisation, l'on utilise le bac décrit dans le document CA - A 1,198,466 (Dupont et al), lequel est caractérisé par son système d'arêtes rapprochées verticales (36) et parallèles. Plus spécifiquement, l'on utilise une réalislation dudit bac où les arêtes sont disposées en diagonale et que les canaux formés par les arêtes communiquent entre eux. Avantageusement, ces arêtes 36 sont pointues.

Ledit bac est disposé au centre du tapis, par rapport à son axe longitudinal, dans la portion destinée à couvrir la partie la plus basse du plancher de l'auto.

De plus, bien qu'il existe une grande variété de matériaux pouvant être utilisés pour la confection du tapis 10, il est suggéré d'utiliser du polychlorure de vinyle pour la base 30 incluant le bac 32 et le rebord 34 et du nylon ou autre fibre (monobrin) du même genre pour la moquette 20. Ladite moquette 20 peut aussi être enduite d'un endos de latex ou autre.

Le choix des matériaux doit se faire en considérant que la moquette 20 doit être en mesure de supporter, sans être endommagée, une température légèrement supérieure à la température de fusion de la matière plastique utilisée pour la réalisation de la base 30.

Bien que l'invention a été décrite au moyen d'une réalisation, il doit être compris que des variations peuvent y être apportées sans pour autant s'éloigner de l'invention.

## Revendications

1/ Un tapis d'automobile amovible (10) consistant en une base de matière plastique (30) comprenant une cuve (32) munie d'un système d'arêtes verticales (36), caractérisé en ce que ladite base (30) est recouverte d'une moquette (20) dont l'espacement et la hauteur des brins (22) sont tels que les particules de contaminants pouvant être déposées sur la moquette (20) puissent tomber entre les brins (22).

2/ Un tapis d'automobile amovible selon la revendication 1, dans lequel l'espacement des brins (22) est compris entre 3 à 5 mm dans les deux axes.

3/ Un tapis d'automobile amovible selon l'une des revendications 1 et 2, dans lequel la hauteur des brins (22) est d'environ 10 mm.

4/ Un tapis d'automobile amovible selon l'une des revendications 1 à 3, dans lequel les arêtes (36) contenues dans la cuve (32) sont rapprochées, subtantiellement pointues et disposées en diagonale.

5/ Un tapis d'automobile amovible selon les revendications 1 ou 2, dans lequel les canaux formés par les arêtes (36) communiquent entre eux.

6/ Un tapis d'automobile amovible selon l'une des revendications 1 à 5, caractérisé en ce que ladite moquette (20) couvre complèrement la base (30) en matière plastique, à l'exception de la portion accupée par le bac (32).

0258162

FIG.1

0258162

FIG. 2

0258162

FIG.3

FIG.4

A—A

$A_1$—$A_2$

H

20, 22, 32, 34, 36